# DEMANDE DE BREVET EUROPEEN

(11) **EP 4 618 111 A1**
(43) Date de publication de la demande: **17.09.2025**
(21) Numéro de dépôt: 25163023.2
(22) Date de dépôt: 11.03.2025
(51) Int. Cl.: H01B 7/30, H01B 9/02, H01B 11/18, H01B 9/00

(54) **CABLE LONGITUDINAL POUR LE TRANSPORT DE PUISSANCE ÉLECTRIQUE, CHAINE PROPULSIVE POUR AÉRONEF ET PROCÉDÉ ASSOCIÉS**

(30) Priorité: 14.03.2024 FR 2402534
(71) Demandeur: Safran Electrical & Power, 31702 Blagnac (FR)
(72) Inventeur: AZEMARD, Laurent Pierre François Jule, 77550 MOISSY-CRAMAYEL (FR); GENOULAZ, Jérôme, 77550 MOISSY-CRAMAYEL (FR)
(74) Mandataire: Argyma

(57) **Abrégé**

Un câble longitudinal (10) comprenant un premier conducteur (1), une première couche de semi-conducteur (2), une première couche d'isolation (3), le premier conducteur (1) comprenant une pluralité de fils conducteurs (4) comprenant chacun un brin conducteur (40) qui est recouvert d'une gaine d'isolation (41), le premier conducteur (1) comportant au moins une rainure longitudinale discontinue à la périphérie découvrant le brin conducteur (40) des fils conducteurs (4) au niveau d'une zone de contact (ZC), chaque brin conducteur (40) découvert étant un brin conducteur de lissage (5), chaque brin conducteur de lissage (5) comportant des portions longitudinales recouvertes d'une gaine d'isolation (51) et des portions longitudinales découvertes, les portions longitudinales découvertes (P2) étant en contact avec la première couche de semi-conducteur (2) au niveau de la zone de contact (ZC), les zones de contact (ZC) étant écartées d'un même pas de contact.

## Description

### DOMAINE TECHNIQUE

La présente invention concerne le domaine de la transmission de puissance électrique à travers un câble, en particulier, pour une application aéronautique.

Le changement climatique est une préoccupation majeure pour de nombreux organes législatifs et de régulation à travers le monde. En effet, diverses restrictions sur les émissions de carbone ont été, sont ou seront adoptées par divers Etats. En particulier, une norme ambitieuse s'applique à la fois aux nouveaux types d'avions mais aussi ceux en circulation nécessitant de devoir mettre en oeuvre des solutions technologiques afin de les rendre conformes aux réglementations en vigueur. L'aviation civile se mobilise depuis maintenant plusieurs années pour apporter une contribution à la lutte contre le changement climatique.

Les efforts de recherche technologique ont déjà permis d'améliorer de manière très significative les performances environnementales des avions. La Déposante prend en considération les facteurs impactants dans toutes les phases de conception et de développement pour obtenir des composants et des produits aéronautiques moins énergivores, plus respectueux de l'environnement et dont l'intégration et l'utilisation dans l'aviation civile ont des conséquences environnementales modérées dans un but d'amélioration de l'efficacité énergétique des avions.

Par voie de conséquence, la Déposante travaille en permanence à la réduction de son incidence climatique négative par l'emploi de méthodes et l'exploitation de procédés de développement et de fabrication vertueux et minimisant les émissions de gaz à effet de serre au minimum possible pour réduire l'empreinte environnementale de son activité.

Ces travaux de recherche et de développement soutenus portent à la fois sur les nouvelles générations de moteurs d'aéronefs, l'allègement des appareils, notamment par les matériaux employés et les équipements embarqués allégés, le développement de l'emploi des technologies électriques pour assurer la propulsion, et, indispensables compléments aux progrès technologiques, les biocarburants aéronautiques.

Un aéronef électrique ou hybride comporte de manière classique une chaine propulsive comprenant des moteurs électriques qui doivent être alimentés électriquement avec une forte puissance, c'est-à-dire, avec une tension élevée (230V-3000V) à haute fréquence (400Hz-3000Hz) avec une intensité élevée (100A-1000A).

A cet effet, la chaine propulsive comporte une pluralité de câble longitudinaux qui sont répartis dans l'aéronef afin de relier différents équipements électriques. Les équipements électriques se présentent par exemple sous la forme de générateurs, de dispositifs électroniques de puissance, de moteurs électriques, etc.

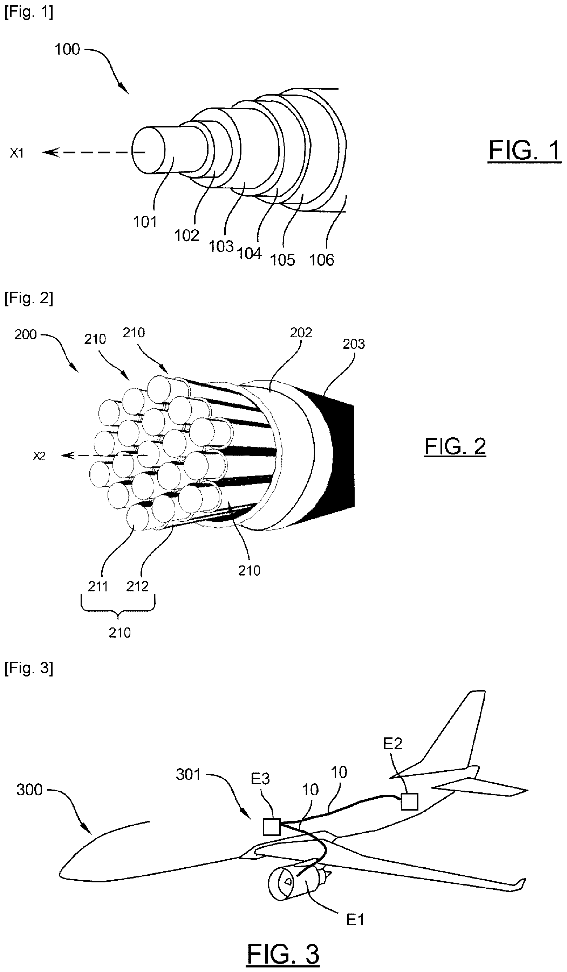

Un câble doit pouvoir transporter une haute puissance mais également posséder un encombrement et une masse réduite pour permettre son intégration dans un aéronef sans pénaliser sa consommation d'énergie. A cet effet, en référence à la figure 1, on connait dans l'art antérieur un câble du type « coaxial » 100 qui s'étend longitudinalement selon un axe X1 et qui comporte :
- un premier conducteur 101,
- une première couche de semi-conducteur 102 entourant le premier conducteur 101,
- une couche d'isolation 103 entourant la première couche de semi-conducteur 102,
- une deuxième couche de semi-conducteur 104 entourant la couche d'isolation 103, et
- deux gaines de protection isolante 105, 106.

En pratique, lors de la circulation d'un courant alternatif ou d'un courant à modulation de largeur d'impulsion, le câble 100 s'échauffe de façon plus importante pour des conditions de taille de conducteur par rapport à la fréquence électrique du courant du fait de phénomènes dits « d'effet de peau » et effet de proximité. Aussi, pour ne pas risquer des échauffements indésirables, il est nécessaire de limiter la puissance transmise en réduisant, par exemple, l'intensité du courant ou de diminuer la résistance électrique du conducteur en augmentant par exemple, la taille du conducteur.

Afin d'éliminer cet inconvénient, en référence à la figure 2, on connaît dans l'art antérieur un câble du type « Litz » 200, qui s'étend longitudinalement selon un axe X2, comprenant plusieurs fils conducteurs 210 qui sont isolés électriquement les uns des autres. Chaque fil conducteur 210 comprend un brin conducteur 211 qui est recouvert d'une gaine d'isolation 212. Les fils conducteurs 210 sont torsadés afin de former le conducteur qui peut être ensuite protégé par des gaines de protection isolante 202, 203. De manière avantageuse, le courant électrique peut circuler de façon équilibrée dans chaque brin conducteur 211.

Un câble du type Litz 200 ne permet pas de contenir le champ électrique de manière aussi sécurisée qu'un câble coaxial 100. En effet, dans un câble du type « coaxial » 100, la couche de semi-conducteur 102 permet de lisser le champ électrique issu du premier conducteur 101. La présence des couches de semi-conducteur 102 et 104 de part et d'autre de la couche d'isolation 103, permettent de contenir de manière optimale le champ électrique à l'intérieur de la couche d'isolation 103.

Pour lisser le champs électrique issu d'un conducteur 101, il est nécessaire que la couche de semi-conducteur 102, soit au même potentiel électrique que ledit conducteur 101. Aussi, l'utilisation d'une couche de semi-conducteur 102 ne peut pas être utilisée avec un câble du type Litz 200 étant donné que les fils conducteurs 210 sont isolés électriquement les uns des autres et ne peuvent donc pas être en contact électrique avec l'environnement.

L'invention vise ainsi à éliminer au moins certains de ces inconvénients en proposant un câble pour le transport de puissance électrique qui permette d'éviter tout risque d'échauffement supplémentaire par « effet de peau » et effet de proximité tout en permettant d'augmenter la sécurité électrique.

Bien que l'invention soit née à l'origine pour un câble du type « coaxial », la présente invention s'applique également pour un câble simple dont l'isolation dispose d'au moins une couche de semi-conducteur.

### PRESENTATION DE L'INVENTION

L'invention concerne un câble longitudinal pour le transport de puissance électrique, le câble longitudinal comprenant :
- Un premier conducteur,
- Une première couche de semi-conducteur entourant le premier conducteur,
- Une première couche d'isolation entourant la première couche de semi-conducteur,
- le premier conducteur ayant une périphérie en contact avec la première couche de semi-conducteur, le premier conducteur comprenant :
   - une pluralité de fils conducteurs comprenant chacun un brin conducteur qui est recouvert d'une gaine d'isolation de manière à ce que les brins conducteurs soient isolés électriquement les uns des autres,
   - le premier conducteur comportant au moins une rainure longitudinale discontinue à la périphérie découvrant le brin conducteur des fils conducteurs au niveau d'une zone de contact, chaque brin conducteur découvert étant un brin conducteur de lissage, chaque brin conducteur de lissage comportant des portions longitudinales recouvertes d'une gaine d'isolation et des portions longitudinales découvertes, les portions longitudinales découvertes étant en contact avec la première couche de semi-conducteur au niveau de la zone de contact de manière à ce que la première couche de semi-conducteur ait le même potentiel électrique que le brin conducteur de lissage, les zones de contact étant écartées d'un même pas de contact.

De manière avantageuse, on obtient un câble qui permet, d'une part, un lissage du champ électrique optimal et, d'autre part, un échauffement minimal par « effet de peau » et effet de proximité. De manière avantageuse, un ou plusieurs conducteurs de lissage sont utilisés pour conduire de la puissance et pour égaliser le potentiel électrique (équipotentialité) tandis que les autres brins conducteurs sont isolés de manière à réduire l'effet de peau et l'effet de proximité. Le câble obtenu possède une masse limitée et un encombrement restreint. Le câble est parfaitement adapté pour le transport de forte puissance du type alternatif ou MLI (Modulation Largeur Impulsion) à haute altitude. Cela permet d'augmenter la performance de l'isolation électrique en réduisant les phénomènes de décharges partielles, les phénomènes de renforcement local du champ électrique, les phénomènes de charges d'espace et le vieillissement électrique de la couche d'isolation. De manière avantageuse, le brin conducteur de lissage est partiellement recouvert d'une gaine d'isolation de manière à limiter l'effet de peau et permettre une égalisation du potentiel électrique. De manière avantageuse, le risque d'échauffement par contact interne de deux brins conducteur de lissage peut être avantageusement évité.

De manière avantageuse, un brin conducteur de lissage est un fil conducteur dont la gaine d'isolation a été partiellement retiré. Cela est particulièrement avantageux étant donné qu'il suffit de former une rainure longitudinale discontinue sur un premier conducteur formé à partir d'uniquement des fils conducteurs. Les zones de contact sont ainsi formées de manière pratique, régulière et précise.

Selon un aspect, le premier conducteur comprend au moins deux brins conducteur de lissage, de préférence, au moins trois. Selon un aspect, le premier conducteur comprend moins de cinq brins conducteur de lissage. Selon un aspect le nombre de fils conducteurs de lissage est supérieur à 10, de préférence, supérieur à 20.

L'utilisation de plusieurs brins conducteurs de lissage permet d'égaliser le potentiel électrique de la première couche de semi-conducteur selon plusieurs zones de contact. L'égalisation du potentiel électrique est ainsi plus homogène et performante. L'utilisation d'un nombre restreint de brins conducteur de lissage permet de limiter l'effet de peau et l'effet de proximité susceptibles de générer des échauffements.

Selon un aspect, le premier conducteur ayant une périphérie, les brins conducteur de lissage sont répartis angulairement à la périphérie du premier conducteur. Cela permet de répartir les zones de contact. L'égalisation du potentiel électrique est ainsi plus homogène et performante.

Selon un aspect, le brin conducteur de lissage possède la même section qu'un brin conducteur d'un fil conducteur. Cela permet avantageusement de conduire de manière homogène de la puissance électrique.

Selon un aspect, le brin conducteur de lissage est un brin conducteur d'un fil conducteur. Les brins possèdent ainsi les mêmes caractéristiques pour le transport de puissance électrique.

Selon un aspect, le premier conducteur comprenant au moins un toron de fils conducteurs torsadé avec un pas de torsadage qui est constant, le pas de contact est un multiple du pas de torsadage. Cela permet de conserver le fil de contact isolé à l'intérieur d'un toron.

Selon un aspect, le pas de contact est égal au pas de torsadage. Cela permet de maximiser le lissage.

Selon un aspect, le câble comprend au moins deux rainures longitudinales discontinues, de préférence, et au moins trois rainures longitudinales. L'égalisation du potentiel électrique est ainsi plus homogène et performante.

Selon un aspect, les portions découvertes sont obtenues par abrasion de la gaine d'isolation du brin conducteur du fil conducteur.

Selon un aspect, le câble comprend au moins un toron de fils conducteurs, de préférence, une pluralité de torons de fils conducteurs. Un toron permet de faire varier la position des fils conducteurs dans une section transversale afin qu'un fil de conducteur soit situé à la périphérie de manière périodique. Les champs magnétiques sont par ailleurs équilibrés. Les fils conducteurs alternent entre une position intérieure et une position extérieure.

Selon un aspect, le toron comporte au moins un brin conducteur de lissage assemblé avec les fils conducteurs qui sont par nature isolés.

Selon un aspect, le câble comporte :
- Une deuxième couche de semi-conducteur entourant la première couche d'isolation et
- Un deuxième conducteur entourant la deuxième couche de semi-conducteur.

Cela permet de former un câble « coaxial » ayant un « effet de peau » et un effet de proximité qui est réduit. Une puissance électrique importante peut être transmise avec une sécurité électrique accrue.

L'invention concerne également une chaine propulsive pour aéronef comprenant une pluralité d'équipements électriques reliés par au moins un câble de puissance tel que présenté précédemment.

L'invention concerne aussi un aéronef comprenant une chaine propulsive telle que présentée précédemment.

L'invention concerne également un procédé de fabrication d'un câble longitudinal pour le transport de puissance électrique, le procédé comprenant des étapes consistant à :
- Fournir un premier conducteur comprenant une pluralité de fils conducteurs comprenant chacun un brin conducteur qui est recouvert d'une gaine d'isolation de manière à ce que les brins conducteurs soient isolés électriquement les uns des autres
- Former au moins une rainure longitudinale discontinue à la périphérie découvrant le brin conducteur des fils conducteurs au niveau d'une zone de contact, chaque brin conducteur découvert étant un brin conducteur de lissage, chaque brin conducteur de lissage comportant des portions longitudinales recouvertes d'une gaine d'isolation et des portions longitudinales découvertes,

- Entourer le premier conducteur avec une première couche de semi-conducteur de manière à ce que les portions longitudinales découvertes étant en contact avec la première couche de semi-conducteur au niveau de la zone de contact de manière à ce que la première couche de semi-conducteur ait le même potentiel électrique que le brin conducteur de lissage, les zones de contact étant écartées d'un même pas de contact,
- Entourer la première couche de semi-conducteur avec une première couche d'isolation.

Selon un aspect, le procédé comprend une étape de torsadage des fils conducteurs et du au moins un conducteur de lissage pour obtenir le premier conducteur.

Selon un aspect, le procédé comprend une étape de torsadage de fils conducteurs pour obtenir le premier conducteur et une étape de formation d'au moins une rainure longitudinale discontinue découvrant le au moins un brin conducteur des fils conducteurs à la périphérie du premier conducteur, chaque brin conducteur découvert étant un brin conducteur de lissage.

L'étape de torsadage est réalisée de préférence uniquement avec des fils conducteurs.

Selon un aspect, l'étape de formation de la au moins une rainure longitudinale discontinue est réalisée par abrasion de la gaine d'isolation des fils conducteurs.

### PRESENTATION DES FIGURES

L'invention sera mieux comprise à la lecture de la description qui va suivre, donnée à titre d'exemple, et se référant aux figures suivantes, données à titre d'exemples non limitatifs, dans lesquelles des références identiques sont données à des objets semblables.
La figure 1 est une représentation schématique d'un câble coaxial selon l'art antérieur.
La figure 2 est une représentation schématique d'un câble de Litz selon l'art antérieur.
La figure 3 est une représentation schématique d'un aéronef avec des câbles de transport de puissance.
La figure 4 est une représentation schématique d'une section d'un câble longitudinal selon une forme de réalisation de l'invention avec un unique brin conducteur de lissage.
La figure 5 est une représentation schématique rapprochée de la figure 4.
La figure 6 est une représentation schématique d'une section d'un câble longitudinal selon une forme de réalisation de l'invention avec plusieurs brins conducteurs de lissage.
La figure 7 est une représentation schématique en coupe d'un premier conducteur dans lequel le torsadage du brin conducteur de lissage est représenté.
La figure 8 est une représentation schématique de dessus du premier conducteur de la figure 7.
La figure 9 est une représentation schématique en coupe rapprochée d'un brin conducteur de lissage selon une première forme de réalisation.
La figure 10 est une représentation schématique en coupe d'un premier conducteur dans lequel le torsadage du brin conducteur de lissage est représenté.
La figure 11 est une représentation schématique d'un dispositif d'abrasion d'un premier conducteur pour former trois rainures longitudinales discontinues.
La figure 12 est une représentation schématique du premier conducteur avec une rainure longitudinale discontinue.
La figure 13 est une représentation schématique du dispositif d'abrasion de la figure 11 vu dans un plan transversal à l'axe du premier conducteur.
La figure 14 est une représentation schématique du dispositif d'abrasion de la figure 11 vu dans un plan latéral à l'axe du premier conducteur.
La figure 15 est une représentation schématique en coupe rapprochée d'un brin conducteur de lissage selon une deuxième forme de réalisation.
La figure 16 est une représentation schématique d'une section d'un câble longitudinal avec un unique brin conducteur de lissage selon la deuxième forme de réalisation.
La figure 17 est une représentation schématique rapprochée de la figure 16.
La figure 18 est une représentation schématique d'un câble coaxial avec un unique brin conducteur de lissage.
La figure 19 est une représentation schématique d'un câble coaxial avec plusieurs brins conducteurs de lissage.

Il faut noter que les figures exposent l'invention de manière détaillée pour mettre en oeuvre l'invention, lesdites figures pouvant bien entendu servir à mieux définir l'invention le cas échéant.

### DESCRIPTION DETAILLEE DE L'INVENTION

L'invention concerne un câble longitudinal pour le transport de puissance électrique, en particulier, dans le domaine aéronautique. Il va de soi que l'invention s'applique aussi à d'autres domaines techniques tels que l'industrie, le maritime, le ferroviaire, etc.

En référence à la figure 3, il est représenté un aéronef 300 comprenant une chaine propulsive 301 comprenant une pluralité d'équipements électriques E1-E3 reliés par une pluralité de câbles de puissance 10. Les équipements électriques E1-E3 se présentent par exemple sous la forme de générateurs, de dispositifs électroniques de puissance, de moteurs électriques, etc.

Le câble longitudinal 10 est configuré pour transporter une puissance élevée, en particulier, une tension élevée (230V-3000V) à haute fréquence (400Hz-3000Hz) avec une intensité élevée (100A-1000A). Un tel câble longitudinal 10 est adapté pour alimenter un moteur électrique de propulsion.

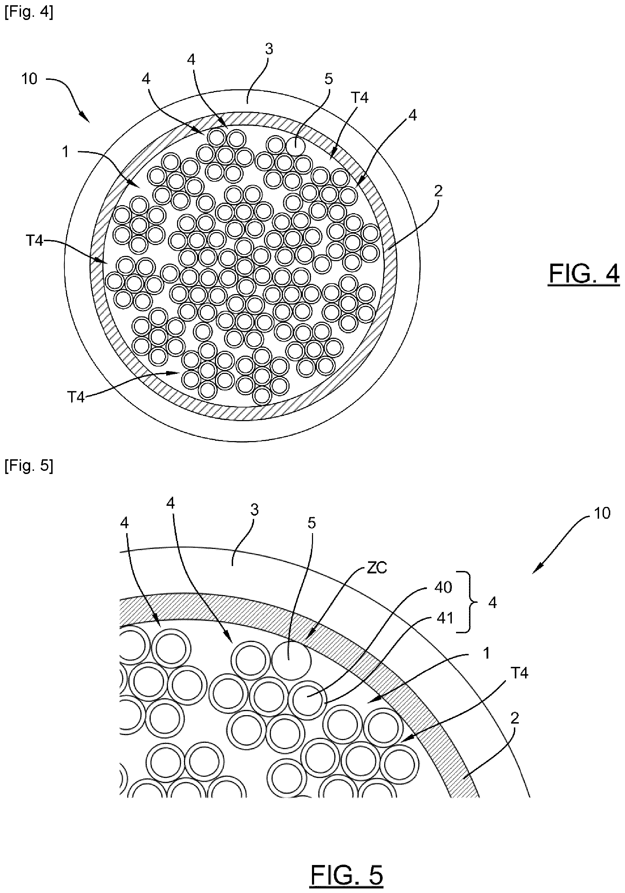

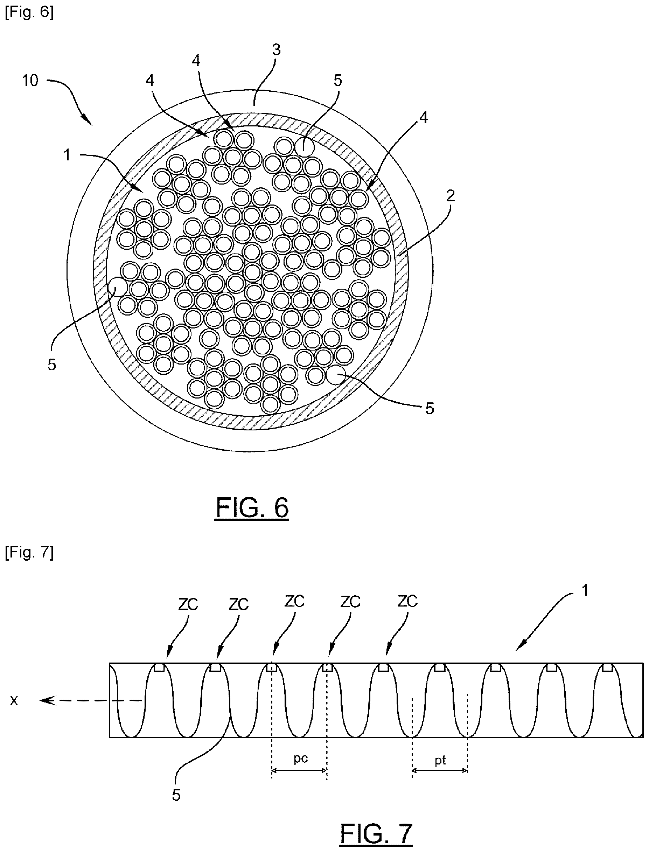

En référence aux figures 4 et 5, il est représenté une vue en coupe d'une forme de réalisation d'un câble longitudinal 10 pour le transport de puissance électrique. Le câble longitudinal 10 s'étend selon un axe X représenté à la figure 7.

Comme illustré aux figures 4 et 5, le câble longitudinal 10 comprend un premier conducteur 1, une première couche de semi-conducteur 2 entourant le premier conducteur 1, et une première couche d'isolation 3 entourant la première couche de semi-conducteur 2. Le câble longitudinal 10 est ainsi un câble simple par opposition à un câble coaxial qui sera présenté par la suite.

La première couche de semi-conducteur 2 est formée autour du premier conducteur 1 et est configurée pour former un écran de lissage du champ électrique issu du premier conducteur 1. De manière préférée, la première couche de semi-conducteur 2 est réalisée en matériau isolant polymère de type perfluoroalkoxy (PFA), fluorinated ethylene propylene (FEP), éthylène tétrafluoroéthylène (ETFE), silicones, fluorosilicones, caoutchoucs, thermodurcissables ou thermoplastiques de type polyetheretherketone (PEEK) ou autres, ou bio-sourcés comportant des additifs qui permettent de modifier leurs propriétés électriques, comme par exemple des charges noir de carbone, nanoparticules, métalliques pour apporter une conductivité électrique maitrisée.

La première couche d'isolation 3 entourant la première couche de semi-conducteur 2 est configurée pour assurer l'isolation électrique. De manière préférée, la première couche d'isolation 3 est réalisée en matériau isolant polymère de type perfluoroalkoxy (PFA), fluorinated ethylene propylene (FEP), éthylène tétrafluoroéthylène (ETFE), silicones, fluorosilicones, caoutchoucs, thermodurcissables ou thermoplastiques de type polyetheretherketone (PEEK) ou autres, ou bio-sourcés. De préférence, elle sera réalisée dans le même matériau isolant que la couche semi-conductrice mais sera exempte de charges conductrices. Afin que la première couche d'isolation 3 remplisse sa fonction de manière optimale, il est important que la première couche de semi-conducteur 2 assure un lissage performant du champ électrique issu du premier conducteur 1. Le premier conducteur 1 possède une périphérie qui est configurée pour être en contact avec la première couche de semi-conducteur 2.

Comme illustré aux figures 4 et 5, le premier conducteur 1 comprend une pluralité de fils conducteurs 4 comprenant chacun un brin conducteur 40 qui est recouvert d'une gaine d'isolation 41 de manière à ce que les brins conducteurs 40 soient isolés électriquement les uns des autres. Les fils conducteurs 4 sont ainsi des « fils de Litz » et permettent de réduire l'effet de peau et de proximité qui entraine des échauffements locaux. Un brin conducteur 40 peut comprendre un ou plusieurs fils électriques.

Dans cet exemple, le brin conducteur 40 est réalisé en un matériau conducteur de type cuivre, aluminium, alliages ou équivalent, de préférence, en cuivre. Le brin conducteur 40 possède un diamètre compris entre 0.008 mm et 3 mm. La gaine d'isolation 41 est réalisé en émail, vernis ou thermoplastiques ou équivalent, de préférence, en émail ou vernis Polyuréthane (PUR), Polyesterimides (PES), Polyester imide (PEI), Polyamide imide (PAI), Polyimide simples (PI), Polyimide aromatiques, ou encore en thermoplastiques perfluoroalkoxy (PFA) ou polyetheretherketone (PEEK). La gaine d'isolation 41 possède une épaisseur comprise entre 0.001 mm et 0.05 mm.

Comme illustré à la figure 5, le premier conducteur 1 comprend en outre au moins un brin conducteur de lissage 5 en contact avec la première couche de semi-conducteur 2 selon au moins une zone de contact ZC de manière à ce que le la première couche de semi-conducteur 2 ait le même potentiel électrique que le brin conducteur de lissage 5. La puissance électrique est transmise par les brins conducteurs 40 des fils conducteurs 4 mais également par le ou les brins conducteurs de lissage 5.

Ainsi, certains conducteurs de puissance, appelés brins conducteurs de lissage 5, sont en contact avec la première couche de semi-conducteur 2 de manière à permettre à la première couche de semi-conducteur 2 de lisser le champ électrique issu du premier conducteur 1 et ainsi améliorer l'isolation électrique mise en œuvre par la première couche d'isolation 3.

Selon un aspect, en référence aux figures 4 et 5, le câble longitudinal 10 comprend au moins un toron T4 de fils conducteurs 4, de préférence, une pluralité de torons T4 de fils conducteurs 4. En référence à la figure 4, les fils conducteurs 4 et le brin conducteur de lissage 5 sont assemblés et torsadés ensemble de manière à former des vrilles le long de l'axe X du câble longitudinal 10 comme illustré schématiquement à la figure 7. Autrement dit, à une position longitudinale donnée du câble longitudinal 10, un fil conducteur 4 et/ou le brin conducteur de lissage 5 n'est pas situé à la même position dans une section transversale du câble longitudinal 10. Il va néanmoins de soi que certains fils conducteurs pourraient ne pas être torsadés. Le ou les brins conducteurs de lissage 5 sont de préférence tous torsadés. Dans un premier conducteur 1, les fils conducteurs 4 et le ou les brins conducteurs de lissage 5 peuvent être torsadés ensemble dans un seul toron ou assemblés en torons élémentaires qui sont ensuite eux-mêmes assemblés et torsadés pour former un toron global.

De manière préférée, le brin conducteur de lissage 5 possède la même section qu'un brin conducteur 40 d'un fil conducteur 4. Cela permet avantageusement pour chaque brin conducteur 40, 5 de posséder des caractéristiques proches, ce qui améliore la durée de vie et facilite le transport de puissance électrique.

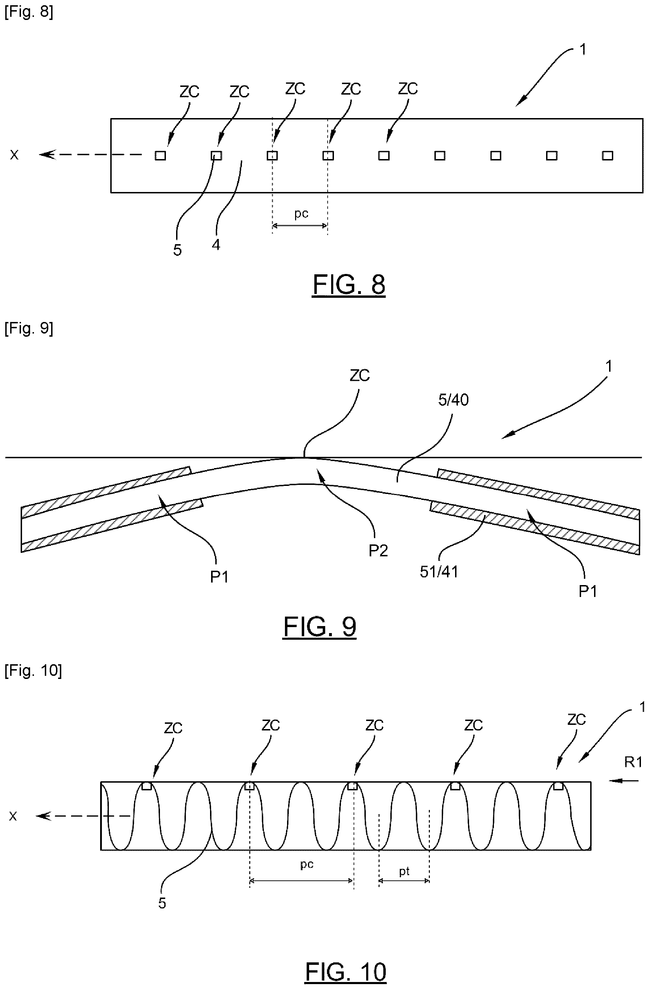

En référence aux figures 7 et 8, il est représenté de manière schématique un brin conducteur de lissage 5 qui est torsadé avec un pas de torsadage pt qui est constant dans le premier conducteur 1. A chaque pas de torsadage pt, le brin conducteur de lissage 5 est positionné à la périphérie du premier conducteur 1 de manière périodique, c'est-à-dire, en contact avec la première couche de semi-conducteur 2 (non représentée) selon une zone de contact ZC. Dans cette forme de réalisation, les zones de contact ZC sont ainsi écartées longitudinalement d'un pas de contact pc qui est égal au pas de torsadage pt. Comme illustré à la figure 8, les zones de contact ZC sont écartées axialement du pas de contact pc.

Selon une variante, le premier conducteur 1 peut comprendre plusieurs brins conducteur de lissage 5 répartis angulairement à la périphérie du premier conducteur 1. A la figure 6, il est prévu avantageusement trois conducteurs de lissage 5 écartés angulairement de 120°. Dans cet exemple, les zones de contact des conducteur de lissage 5 appartiennent à un même plan en coupe transversale du câble longitudinal 10. Il est néanmoins préférable que les zones de contact de conducteurs de lissage 5 différents appartiennent à des plans différents de manière à répartir longitudinalement les zones de contact et permettre une mise au potentiel électrique de la première couche de semi-conducteur 2 qui soit performante.

En référence à la figure 9, le brin conducteur de lissage 5 comporte des portions longitudinales recouvertes P1 d'une gaine d'isolation 51 et des portions longitudinales découvertes P2. En particulier, La présence de portions longitudinales recouvertes P1 permet de réduire l'effet de peau et l'effet de proximité et, par voie de conséquence, les échauffements. Une plus forte puissance électrique peut ainsi être transportée.

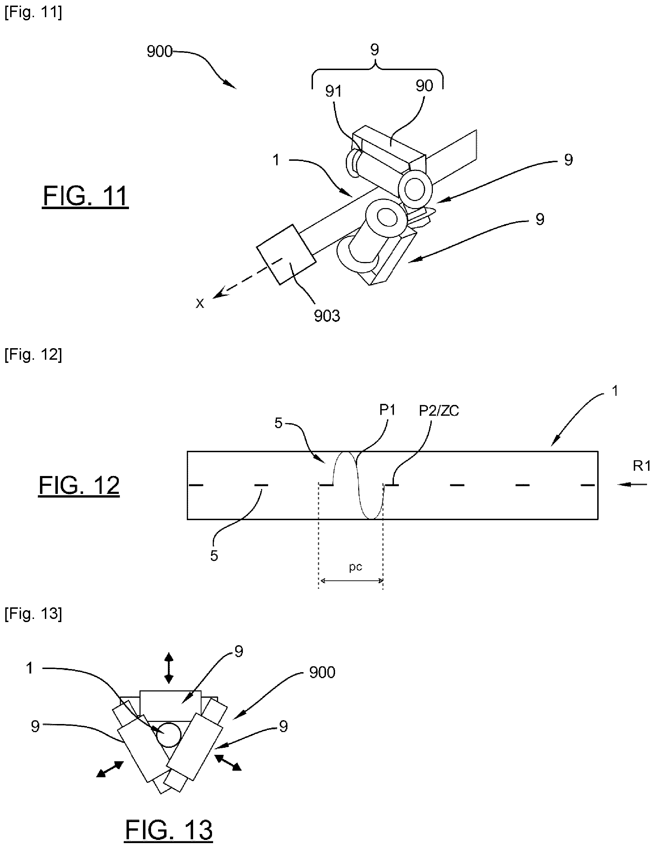

Selon une première variante, le brin conducteur de lissage 5 est formé de manière indépendante. De préférence, les fils conducteurs 4 et le brin conducteur de lissage 5 sont assemblé et torsadés ensemble de manière à former des vrilles le long de l'axe X du câble longitudinal 10 comme illustré à la figure 12. Les portions longitudinales découvertes P2 sont positionnées à la périphérie du premier conducteur 1 de manière à être en contact avec la première couche de semi-conducteur 2 selon une pluralité de zones de contact ZC. A cet effet, les zones de contact ZC sont ainsi écartées longitudinalement d'un pas de contact pc qui est égal à un multiple du pas de torsadage pt. A titre d'exemple, en référence à la figure 10, le pas de contact pc est égal à deux fois le pas de torsadage pt. Le pas de contact pc peut être déterminé en fonction des contraintes spécifiques en spécifiant la position des portions longitudinales découvertes P2.

Le premier conducteur 1 est réalisé en intégrant un ou plusieurs brins conducteurs de lissage 5 à la périphérie des fils conducteurs 4. L'ensemble peut ensuite être assemblé et torsadé de manière conventionnelle.

Un exemple de mise en œuvre d'un procédé de fabrication d'un câble longitudinal 10 pour le transport de puissance électrique va être dorénavant présenté.

Le procédé comprend une étape consistant à fournir un premier conducteur 1 comprenant une pluralité de fils conducteurs 4 comprenant chacun un brin conducteur 40 qui est recouvert d'une gaine d'isolation 41 de manière à ce que les brins conducteurs 40 soient isolés électriquement les uns des autres et au moins un brin conducteur de lissage 5 situé à la périphérie du premier conducteur 1.

Le procédé comprend une étape consistant à assembler et torsader des fils conducteurs 4 et le au moins un conducteur de lissage 5 pour obtenir le premier conducteur 1. Le conducteur de lissage 5 est un conducteur comportant des portions recouvertes P1 et des portions découvertes P2.

Le procédé comprend une étape consistant à entourer le premier conducteur 1 avec une première couche de semi-conducteur 2 de manière à ce qu'une portion découverte P2 soit en contact avec la première couche de semi-conducteur 2 selon au moins une zone de contact ZC de manière à ce que le brin conducteur de lissage 5 ait le même potentiel électrique que la première couche de semi-conducteur 2. Le procédé comprend une étape consistant à entourer la première couche de semi-conducteur 2 avec une couche d'isolation 3. De manière préférée, cela est réalisé simultanément en coextrusion.

On obtient ainsi avantageusement un câble longitudinal 10 « simple » permettant le transport de puissance électrique qui permette d'éviter tout risque d'échauffement par « effet de peau » et effet de proximité tout en permettant un lissage du champ électrique afin d'augmenter la sécurité électrique. La masse est réduite ainsi que l'encombrement.

En pratique, il est complexe de réaliser un torsadage optimal afin que les portions longitudinales découvertes P2 soient positionnées précisément à la périphérie du premier conducteur 1 pour entrer en contact avec la première couche de semi-conducteur 2 selon un pas de contact pc. Selon une variante, le brin conducteur de lissage 5 est un fil conducteur 4 d'un toron de fils conducteur 4 dont la gaine d'isolation 41 a été retirée localement de manière précise et régulière.

Un exemple de mise en œuvre d'un procédé de fabrication d'un câble longitudinal 10 pour le transport de puissance électrique va être dorénavant présenté.

Le procédé comprend une étape consistant à fournir un premier conducteur 1 comprenant une pluralité de fils conducteurs 4 comprenant chacun un brin conducteur 40 qui est recouvert d'une gaine d'isolation 41 de manière à ce que les brins conducteurs 40 soient isolés électriquement les uns des autres et au moins un brin conducteur de lissage 5 situé à une périphérie du premier conducteur 1.

Le procédé comprend une étape consistant à torsader des fils conducteurs 4 et à former au moins une rainure longitudinale discontinue R1 (figure 10) découvrant le brin conducteur 40 des fils conducteurs 4 à la périphérie du premier conducteur 1, chaque brin conducteur découvert 40 étant un brin conducteur de lissage 5.

Autrement dit, on forme un toron avec uniquement des fils conducteurs 4 qui sont identiques, ce qui est très pratique. Puis, on forme une rainure longitudinale discontinue R1 de manière à former des brins conducteurs de lissage 5 comprenant des portions longitudinales recouvertes P1 d'une gaine d'isolation 51 et des portions longitudinales découvertes P2. La formation d'une rainure longitudinale R1 permet de retirer la gaine d'isolation 41 des fils conducteurs 4 de manière locale et périodique à la périphérie du premier conducteur 1.

En référence à la figure 12, la rainure longitudinale discontinue R1 comporte des segments écartés par le pas de contact pc. De manière préférée, le pas de contact pc est égal à un multiple du pas de torsadage pt.

A titre d'exemple, en référence aux figures 11 à 14, il est présenté un dispositif s'abrasion 900 comportant trois organes d'abrasion 9 pour réaliser de manière simultanée trois rainures longitudinales discontinues R1. Il va de soi que le nombre d'organes d'abrasion 9 pourrait être différent ainsi que leurs positions. Les organes d'abrasion 9 sont de préférence décalés par rapport à l'axe du câble longitudinal 10 de manière à ce que les zones de contact ZC des conducteur de lissage 5 appartiennent à des plans différents de manière à répartir longitudinalement les zones de contact ZC et permettre une mise au potentiel électrique de la première couche de semi-conducteur 2 qui soit performante. Dans cet, exemple, le dispositif d'abrasion 900 permet de réaliser trois rainures longitudinales R1 discontinues écartées angulairement.

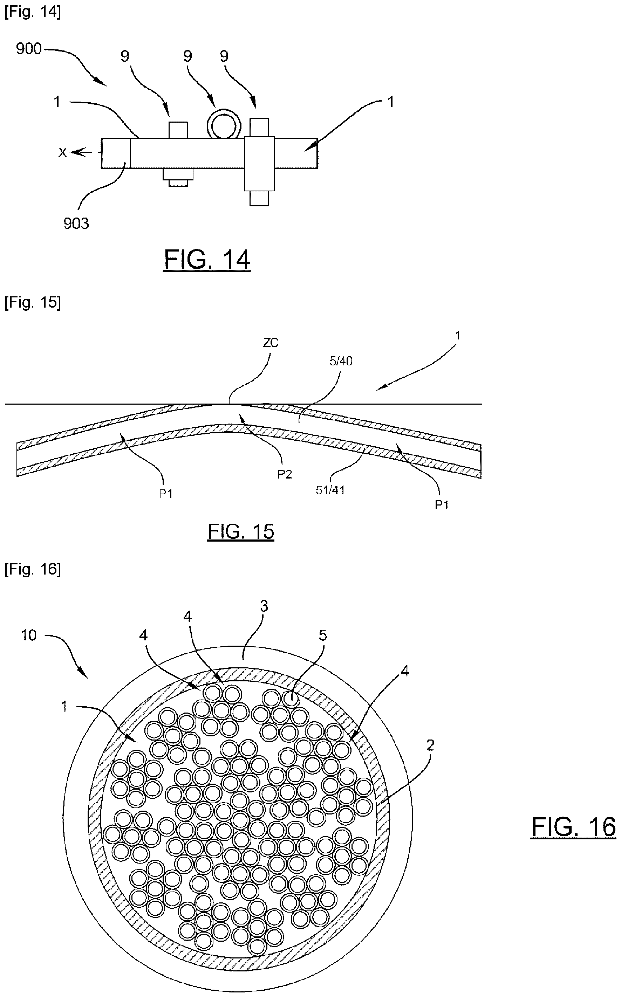

Les organes d'abrasion 9 sont positionnés autour du premier conducteur 1. Chaque organe d'abrasion 9 est configuré pour entrer en contact avec un fil conducteur 4 de la périphérie dans un plan transversal au premier conducteur 1 dans lequel peut se déplacer l'organe d'abrasion 9. Chaque organe d'abrasion 9 est configuré pour retirer la gaine d'isolation 41 du fil conducteur 4 avec lequel il entre en contact comme illustré à la figure 13. **En** référence à la figure 15, après abrasion, le brin conducteur 40 est dénué de gaine d'isolation 41 à la périphérie du premier conducteur 1 afin de former une portion découverte P2, c'est-à-dire, une zone de contact ZC.

Dans cette forme de réalisation, chaque organe d'abrasion 9 comporte un châssis 90 déplaçable radialement par rapport à l'axe X du premier conducteur 1 et un rouleau abrasif 91 entrainé en rotation par rapport au châssis 90. Il va de soi que chaque organe d'abrasion 9 pourrait se présenter sous une forme différente.

Le dispositif d'abrasion 900 comprend un organe d'entrainement 903 du toron de fils conducteurs 4, c'est-à-dire du premier conducteur 1, avec un pas d'entrainement qui correspond au pas de contact pc. Ainsi, chaque organe d'abrasion 9 peut former une zone de contact ZC avec un pas de contact pc qui est très régulier, de préférence, un multiple du pas de torsadage pt. L'organe d'entrainement 903, par exemple un enrouleur motorisé, permet de décaler les portions longitudinales du premier conducteur 1 en contact avec les organes d'abrasion 9.

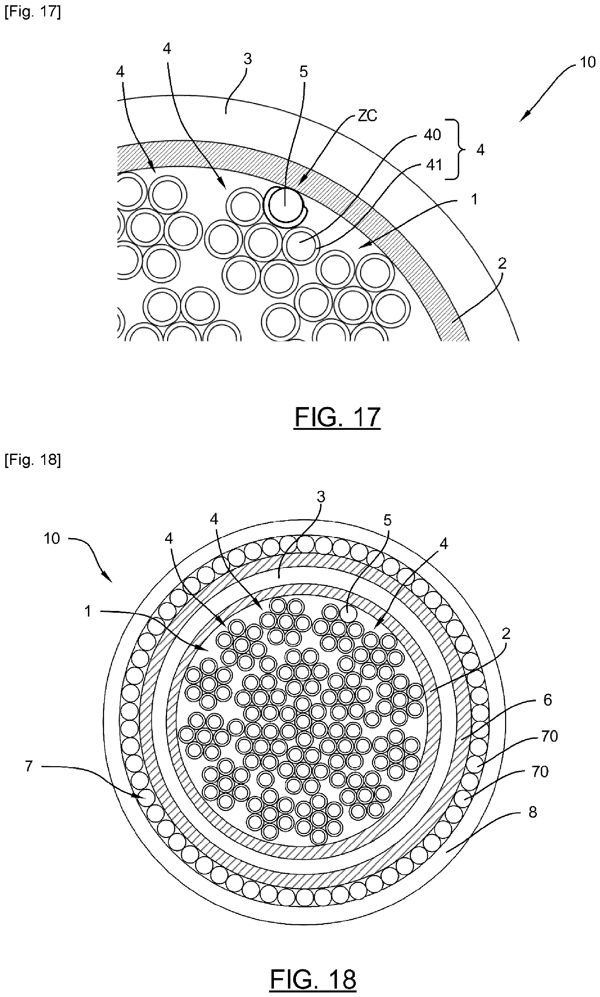

Une fois le premier conducteur 1 obtenu par une des méthodes présentées précédemment, le procédé comprend une étape consistant à entourer le premier conducteur 1 avec une première couche de semi-conducteur 2 de manière à ce que le brin conducteur de lissage 5 soit en contact avec la première couche de semi-conducteur 2 selon au moins une zone de contact ZC comme illustré aux figures 16 et 17. Le brin conducteur de lissage 5 a ainsi le même potentiel électrique que la première couche de semi-conducteur 2.

Le procédé comprend une étape consistant à entourer la première couche de semi-conducteur 2 avec une couche d'isolation 3. De manière préférée, cela est réalisé simultanément en coextrusion.

On obtient ainsi avantageusement un câble longitudinal 10 « simple » permettant le transport de puissance électrique qui permette d'éviter tout risque d'échauffement par « effet de peau » et effet de proximité tout en permettant un lissage du champ électrique afin d'augmenter la sécurité électrique. La fabrication du câble longitudinal 10 est pratique étant donné qu'il suffit de former les portions découvertes P2 sur un toron de fils conducteurs 4 qui peut être obtenu de manière pratique.

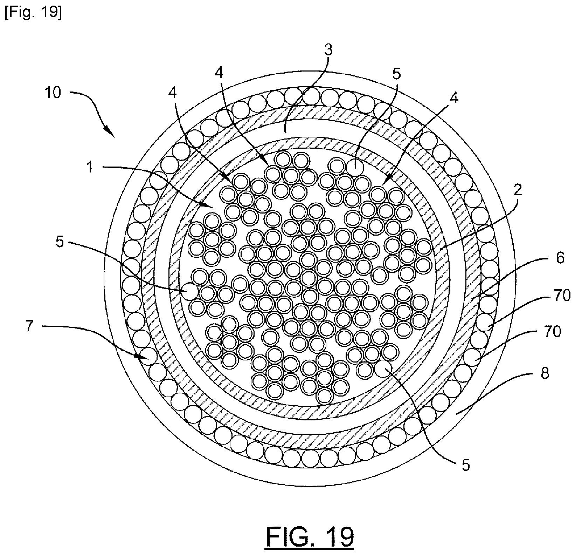

En référence aux figures 18 et 19, on peut également obtenir un câble longitudinal 10 du type « coaxial » qui comporte une deuxième couche de semi-conducteur 6 entourant la couche d'isolation 3, un deuxième conducteur 7 entourant la deuxième couche de semi-conducteur 6 et une gaine de protection isolante 8 entourant le deuxième conducteur 7. Le deuxième conducteur 7 peut être de différentes natures comme une tresse constituée de brins cylindriques ou plats, d'un guipage constitué de brins cylindriques ou plats, d'un feuillard, ou d'un assemblage de ces différentes technologies. Selon un aspect, le deuxième conducteur 7 est dimensionné pour assurer les fonctions de protection électromagnétique et foudre. Le matériau de la gaine de protection isolante 8 peut être le même que celui de la couche d'isolation 3 ou un autre matériau parmi les polymères de type PFA (perfluoroalkoxy), FEP (fluorinated ethylene propylene), ETFE (éthylène tétrafluoroéthylène), des silicones, fluorosilicones, des caoutchoucs, des thermodurcissables ou thermoplastiques de type PEEK ou autres, ou des matériaux bio-sourcés. La gaine de protection extérieure isolante 8 peut également être réalisée dans des matériaux utilisés principalement pour la protection mécanique sous forme de tresse, tels que du Kevlar (nom commercial), nomex (nom commercial), de fibres de verre, des fibres d'aramide, du polyamide, ou tout autre matériau adapté à l'application.

Il peut notamment comprendre une pluralité de fils conducteurs 70 en contact avec la deuxième couche de semi-conducteur 6 qui est raccordée en extrémité à un potentiel de référence afin que la deuxième couche de semi-conducteur 6 soit elle-même à ce potentiel.

Grâce à l'invention, tout échauffement supplémentaire par « effet de peau » et effet de proximité est éliminé grâce une équipotentialité entre le conducteur et la couche de semi-conducteur permet d'augmenter la performance de l'isolation électrique en réduisant les phénomènes de décharges partielles, les phénomènes de renforcement local du champ électrique, les phénomènes de charges d'espace et le vieillissement électrique de la couche d'isolation.

## Revendications

1. Câble longitudinal (10) pour le transport de puissance électrique, le câble longitudinal (10) comprenant:
- Un premier conducteur (1),
- Une première couche de semi-conducteur (2) entourant le premier conducteur (1),
- Une première couche d'isolation (3) entourant la première couche de semi-conducteur (2),
- le premier conducteur (1) ayant une périphérie en contact avec la première couche de semi-conducteur (2), le premier conducteur (1) comprenant :
• une pluralité de fils conducteurs (4) comprenant chacun un brin conducteur (40) qui est recouvert d'une gaine d'isolation (41) de manière à ce que les brins conducteurs (40) soient isolés électriquement les uns des autres,
• le premier conducteur (1) comportant au moins une rainure longitudinale discontinue (R1) à la périphérie découvrant le brin conducteur (40) des fils conducteurs (4) au niveau d'une zone de contact (ZC), chaque brin conducteur (40) découvert étant un brin conducteur de lissage (5), chaque brin conducteur de lissage (5) comportant des portions longitudinales (P1) recouvertes d'une gaine d'isolation (51) et des portions longitudinales découvertes (P2), les portions longitudinales découvertes (P2) étant en contact avec la première couche de semi-conducteur (2) au niveau de la zone de contact (ZC) de manière à ce que la première couche de semi-conducteur (2) ait le même potentiel électrique que le brin conducteur de lissage (5), les zones de contact (ZC) étant écartées d'un même pas de contact (pc).

2. Câble longitudinal (10) selon la revendication 1, dans lequel, le premier conducteur (1) comprenant au moins un toron (T4) de fils conducteurs (4) torsadé avec un pas de torsadage (pt) qui est constant, le pas de contact (pc) est un multiple du pas de torsadage (pt).

3. Câble longitudinal (10) selon la revendication 2, dans lequel le pas de contact (pc) est égal au pas de torsadage (pt).

4. Câble longitudinal (10) selon l'une des revendications 1 à 3, dans lequel le premier conducteur (1) comprend au moins deux rainures longitudinales discontinues (R1), de préférence, au moins trois rainures longitudinales (R1).

5. Câble longitudinal (10) selon la revendication 4, dans lequel, les rainures longitudinales discontinues (R1) sont réparties angulairement à la périphérie du premier conducteur (1).

6. Câble longitudinal (10) selon l'une des revendications 1 à 5, dans lequel, les portions découvertes (P2) sont obtenues par abrasion de la gaine d'isolation (41) du brin conducteur (40) du fil conducteur (4).

7. Câble longitudinal (10) selon l'une des revendications 1 à 6, comportant :
- Une deuxième couche de semi-conducteur (6) entourant la première couche d'isolation (3) et
- Un deuxième conducteur (7) entourant la deuxième couche de semi-conducteur (6).

8. Chaine propulsive pour aéronef comprenant une pluralité d'équipements électriques (E1, E2, E3) reliés par au moins un câble de puissance selon l'une des revendications 1 à 7.

9. Procédé de fabrication d'un câble longitudinal (10) pour le transport de puissance électrique, le procédé comprenant des étapes consistant à :
- Fournir un premier conducteur (1) comprenant une pluralité de fils conducteurs (4) comprenant chacun un brin conducteur (40) qui est recouvert d'une gaine d'isolation (41) de manière à ce que les brins conducteurs (40) soient isolés électriquement les uns des autres
- Former au moins une rainure longitudinale discontinue (R1) à la périphérie découvrant le brin conducteur (40) des fils conducteurs (4) au niveau d'une zone de contact (ZC), chaque brin conducteur (40) découvert étant un brin conducteur de lissage (5), chaque brin conducteur de lissage (5) comportant des portions longitudinales (P1) recouvertes d'une gaine d'isolation (51) et des portions longitudinales découvertes (P2),
- Entourer le premier conducteur (1) avec une première couche de semi-conducteur (2) de manière à ce que les portions longitudinales découvertes (P2) étant en contact avec la première couche de semi-conducteur (2) au niveau de la zone de contact (ZC) de manière à ce que la première couche de semi-conducteur (2) ait le même potentiel électrique que le brin conducteur de lissage (5), les zones de contact (ZC) étant écartées d'un même pas de contact (pc),
- Entourer la première couche de semi-conducteur (2) avec une première couche d'isolation (3).

10. Procédé de fabrication selon la revendication 9 comprenant une étape de torsadage de fils conducteurs (4) pour obtenir le premier conducteur (1) et une étape de formation d'au moins une rainure longitudinale discontinue (R1) découvrant le au moins un brin conducteur (40) des fils conducteurs (4) à la périphérie du premier conducteur (1), chaque brin conducteur découvert (40) étant un brin conducteur de lissage (5).

11. Procédé de fabrication selon la revendication 10, dans lequel la au moins une rainure longitudinale discontinue (R1) est réalisée par abrasion de la gaine d'isolation (41) des fils conducteurs (4).
